# EUROPEAN PATENT APPLICATION

(11) **EP 4 542 899 A2**
(43) Date of publication of application: **23.04.2025**
(21) Application number: 24219082.5
(22) Date of filing: 31.12.2019
(51) Int. Cl.: H04L 1/00

(54) **DATA SENDING METHOD, RECEIVING METHOD, SENDING DEVICE AND RECEIVING DEVICE**

(62) Divisional of application: 19958416.0
(71) Applicant: Huawei Technologies Co., Ltd., Shenzhen, Guangdong 518129 (CN)
(72) Inventor: QIU, Xianwen, Shenzhen, Guangdong, 518129 (CN)
(74) Representative: Maiwald GmbH

(57) **Abstract**

Embodiments of this application disclose a data sending method, a data receiving method, a data sending apparatus, and a data receiving apparatus, so as to improve reliability of data transmission on a flexible Ethernet group. The data sending method includes: A sending device determines a plurality of non-faulty physical channels from a plurality of physical channels; the sending device splits and encodes to-be-sent data to obtain a plurality of encoded data segments; and the sending device transmits the plurality of encoded data segments through the plurality of non-faulty physical channels.

## Description

### TECHNICAL FIELD

This application relates to the communications field, and in particular, to a data sending method, a data receiving method, a data sending apparatus, and a data receiving apparatus.

### BACKGROUND

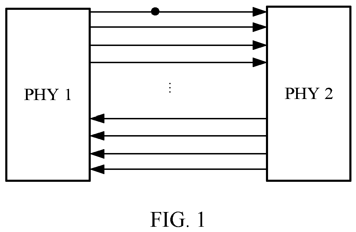

Over the past decade, network service traffic has been growing rapidly, which promotes a fast increase in service bandwidth of communications equipment. An interface speed of the communications equipment is increased from 10 M bandwidth to 100 M bandwidth, and then increased by 1 G or 10 G. A service speed is increased by several times every few years to meet requirements of the network service traffic. To meet service transfer requirements, the International Organization for Standardization defines the IEEE 802.3 Ethernet protocol. The IEEE 802.3 Ethernet protocol proposes to bundle a plurality of 100G physical (PHY) channels to form a transfer channel with a high service rate. FIG. 1 is a schematic diagram of a general structure of the IEEE 802.3 Ethernet protocol. N 25G physical channels are bundled by using a flexible Ethernet (FlexE) protocol to form an Nx25G transfer channel, which is equivalent to a service transfer speed of Nx25G physical channels. This not only meets a transfer requirement of an Nx25G service, but also resolves an economic value problem of service transfer. An Ethernet group refers to a group in which an Ethernet PHY is divided into N physical channels. Physical channels between members at two ends of the Ethernet group form a communications link. In the IEEE802.3 Ethernet protocol, a plurality of physical channels are bound to form a logical channel for service transfer. When a physical channel is faulty, the entire logical channel is faulty. For example, if a physical channel is interrupted, the entire logical channel is interrupted. Therefore, in the current flexible Ethernet, when a physical channel in either a receiving direction or a sending direction is interrupted, a peer member cannot receive data through the logical channel bound by the plurality of physical channels, and working reliability is low.

### SUMMARY

Embodiments of this application provide a data sending method, a data receiving method, a data sending apparatus, and a data receiving apparatus, so as to improve reliability of data transmission on an Ethernet.

According to a first aspect, an embodiment of this application provides a data sending method, including: A sending device determines a plurality of non-faulty physical channels from a plurality of physical channels; the sending device splits and encodes to-be-sent data to obtain a plurality of encoded data segments; and the sending device transmits the plurality of encoded data segments through the plurality of non-faulty physical channels.

According to the foregoing method, the to-be-sent data is split into a plurality of data segments, the split data segments are separately encoded, and each encoded data segment is transmitted as separate data. In this case, when one or more physical channels used for transmitting a data segment are faulty, a non-faulty physical channel may be used for transmission. In this way, it is ensured that a receiving device can receive complete to-be-sent data, and reliability of data transmission on a flexible Ethernet group is improved.

In a possible design, that the sending device splits and encodes to-be-sent data includes: The sending device splits the to-be-sent data into a plurality of data segments of a same length, and separately encodes each data segment.

According to the foregoing method, when it is determined that a physical channel is faulty, and a data segment is transmitted through a non-faulty physical channel, because each segment is of a same length, when data is transmitted through a non-faulty physical channel, an encoding mode of the data segment does not change. In this way, convenience of data transmission is improved.

In a possible design, that the sending device transmits the plurality of encoded data segments through the plurality of non-faulty physical channels includes: The sending device determines a transmission rate required by a first data segment in the encoded data segment, and sends, based on the transmission rate required by the first data segment, the first data segment through at least one non-faulty physical channel.

When data is transmitted by using the foregoing method, because a transmission rate of a single physical channel is limited, when a transmission rate required by a data segment is relatively high, the transmission rate of the data segment may be increased by bundling the plurality of physical channels, so as to meet a transmission rate requirement.

In a possible design, the sending, based on the transmission rate required by the first data segment, the first data segment through at least one non-faulty physical channel includes: determining a transmission rate of each physical channel; and determining, based on a ratio of the transmission rate required by the first data segment to the transmission rate of each physical channel, at least one physical channel used for transmitting the first data segment, and sending the first data segment through the at least one physical channel.

According to the foregoing method, a quantity of physical channels used for transmitting a data segment is determined based on a transmission rate required by the data segment and a transmission rate of a single physical channel, and the data segment is transmitted through the corresponding quantity of physical channels, so as to meet the transmission rate required by the data segment.

In a possible design, that a sending device determines a plurality of non-faulty physical channels from a plurality of physical channels includes: The sending device sends test data to the receiving device through the plurality of physical channels; and the sending device determines the plurality of non-faulty physical channels from the plurality of physical channels based on a feedback of the receiving device on the test data.

According to the foregoing method, before the sending device sends the to-be-sent data, the sending device may send the test data to the receiving device through the plurality of physical channels. The sending device determines the non-faulty physical channel based on the feedback of the receiving device on the test data. In this way, data is transmitted through the non-faulty physical channel, so as to ensure that the receiving device can receive complete data.

According to a second aspect, an embodiment of this application provides a data receiving method, including: A receiving device determines a plurality of non-faulty physical channels from a plurality of physical channels; the receiving device receives a plurality of data segments from the plurality of non-faulty physical channels; and the receiving device decodes the plurality of data segments to obtain a plurality of decoded data segments, and reassembles the plurality of decoded data segments to obtain received data.

According to the foregoing method, because a sending device sends to-be-sent data to the receiving device through the plurality of non-faulty physical channels, the receiving device may receive the plurality of data segments from the plurality of non-faulty physical channels to obtain complete data, and decode and reassemble the plurality of received data segments to obtain the received data. This ensures integrity of the received data by the receiving device and improves reliability of data transmission on an Ethernet.

In a possible design, that the receiving device receives a plurality of data segments from the plurality of non-faulty physical channels includes: The receiving device receives the plurality of data segments of a same length from the plurality of non-faulty physical channels.

According to the foregoing method, when it is determined that a physical channel is faulty, and the receiving device receives a data segment through a non-faulty physical channel, because each segment is of a same length, when the data segment is decoded, an decoding mode of the data segment does not change. In this way, efficiency of data processing is improved.

In a possible design, that the receiving device receives a plurality of data segments from the plurality of non-faulty physical channels includes: The receiving device determines a transmission rate required by a second data segment in the plurality of data segments, and receives the second data segment based on the transmission rate required by the second data segment through at least one non-faulty physical channel.

According to the foregoing method, because a transmission rate of a single physical channel is limited, when a transmission rate requirement required by a data segment is relatively high, the transmission rate of the data segment may be increased by bundling the plurality of physical channels, so as to meet a transmission rate requirement.

In a possible design, the receiving the second data segment based on the transmission rate required by the second data segment through at least one non-faulty physical channel includes: determining a transmission rate of each physical channel; and determining, based on a ratio of the transmission rate required by the second data segment to the transmission rate of each physical channel, at least one physical channel used for transmitting the second data segment, and receiving the second data segment through the at least one physical channel.

According to the foregoing method, a quantity of physical channels used for transmitting a data segment is determined based on a transmission rate required by the data segment and a transmission rate of a single physical channel, and the data segment is transmitted through the corresponding quantity of physical channels, so as to meet the transmission rate required by the data segment.

In a possible design, the data receiving method provided in the second aspect of this application further includes: The receiving device receives test data sent by the sending device, and sends a feedback on the test data to the sending device based on a receiving status of the test data.

According to the foregoing method, the receiving device may receive the test data through the physical channel, and send the receiving status of the test data to the sending device, so that the sending device determines the non-faulty physical channel. In this way, data is transmitted through the non-faulty physical channel.

According to a third aspect, an embodiment of this application provides a data sending apparatus. The apparatus has a function of implementing the method example in the first aspect. The function may be implemented by hardware, or may be implemented by hardware executing corresponding software. The hardware or the software includes one or more modules corresponding to the foregoing functions.

In a possible design, a structure of the data sending apparatus includes a determining unit, a processing unit, and a sending unit. These units may perform corresponding functions in the foregoing method example. For details, refer to detailed descriptions in the method example. Details are not described herein again.

According to a fourth aspect, an embodiment of this application provides a data receiving apparatus. The apparatus has a function of implementing the method example in the second aspect. The function may be implemented by hardware, or may be implemented by hardware executing corresponding software. The hardware or the software includes one or more modules corresponding to the foregoing functions.

In a possible design, a structure of the data receiving apparatus includes a determining unit, a receiving unit, and a processing unit. These units may perform corresponding functions in the foregoing method example. For details, refer to detailed descriptions in the method example. Details are not described herein again.

According to a fifth aspect, an embodiment of this application provides a computer-readable storage medium. The computer-readable storage medium stores computer instructions. When the instructions are run on a computer, the computer is enabled to perform the method according to any one of the first aspect and the possible designs of the first aspect, and the method according to any one of the second aspect and the possible designs of the second aspect.

According to a sixth aspect, an embodiment of this application provides a computer program product. When the computer program product is invoked by a computer, the computer is enabled to perform the method according to any one of the first aspect and the possible designs of the first aspect, and the method according to any one of the second aspect and the possible designs of the second aspect.

### BRIEF DESCRIPTION OF DRAWINGS

FIG. 1 is a schematic diagram of an architecture of an Ethernet system according to an embodiment of this application;
FIG. 2 is a schematic flowchart of a data sending method and a data receiving method according to an embodiment of this application;
FIG. 3 is a schematic diagram 1 of transmission of to-be-sent data according to an embodiment of this application;
FIG. 4 is a schematic diagram 2 of transmission of to-be-sent data according to an embodiment of this application;
FIG. 5 is a schematic diagram 3 of transmission of to-be-sent data according to an embodiment of this application;
FIG. 6 is a schematic diagram of a structure of a data sending apparatus according to an embodiment of this application; and
FIG. 7 is a schematic diagram of a structure of a data receiving apparatus according to an embodiment of this application.

### DESCRIPTION OF EMBODIMENTS

FIG. 1 is a schematic diagram of an architecture of a possible Ethernet system to which an embodiment of this application is applicable. Specifically, an architecture of a flexible Ethernet system shown in FIG. 1 includes a transmission device 1 (represented by a PHY1 in FIG. 1), a transmission device 2 (represented by a PHY2 in FIG. 1), and N physical transmission channels used for transmitting data between the transmission device 1 and the transmission device 2. The transmission device 1 and the transmission device 2 each support the IEEE 802.3 Ethernet protocol.

If the N physical channels are bundled into a large logical channel by using the IEEE802.3 Ethernet protocol, when data is sent through the IEEE802.3 Ethernet protocol, the transmission device 1 encodes to-be-sent data and splits the to-be-sent data into N data segments, sends a first data segment in the N split data segments to a first physical channel, sends a second data segment to a second physical channel, and by analogy, sends an Nth data segment to an Nth physical channel. When receiving data, the transmission device 2 receives the first data segment from the first physical channel, receives the second data segment from the second physical channel, and by analogy, receives the Nth data segment from the Nth physical channel, and reassembles and decodes the received N data segments.

When the N physical channels are bundled into the large logical channel through the IEEE802.3 Ethernet protocol, a transmission rate of the to-be-sent data is a sum of transmission rates of data segments transmitted on all physical channels. Therefore, the transmission rate of the to-be-sent data is increased. However, during data transmission in this mode, once any one or more of the N physical channels used for data transmission are faulty, the transmission device 2 cannot receive a complete data segment. If the transmission device 2 cannot receive complete data, decoding processing cannot be performed on the reassembled data. As a result, data transmission fails.

Based on this, embodiments of this application provide a data sending method, a data receiving method, a data sending apparatus, and a data receiving apparatus, so as to resolve the foregoing problem that normal service transmission cannot be performed if data transmission fails because one or more physical channels on a transmission path are faulty in the IEEE 802.3 Ethernet protocol.

The following specifically describes a data sending solution provided in this application with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of this application, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that, in the description of this application, terms "first" and "second" are merely used for distinguishing and description, but should not be understood as indicating or implying relative importance, or should not be understood as indicating or implying a sequence.

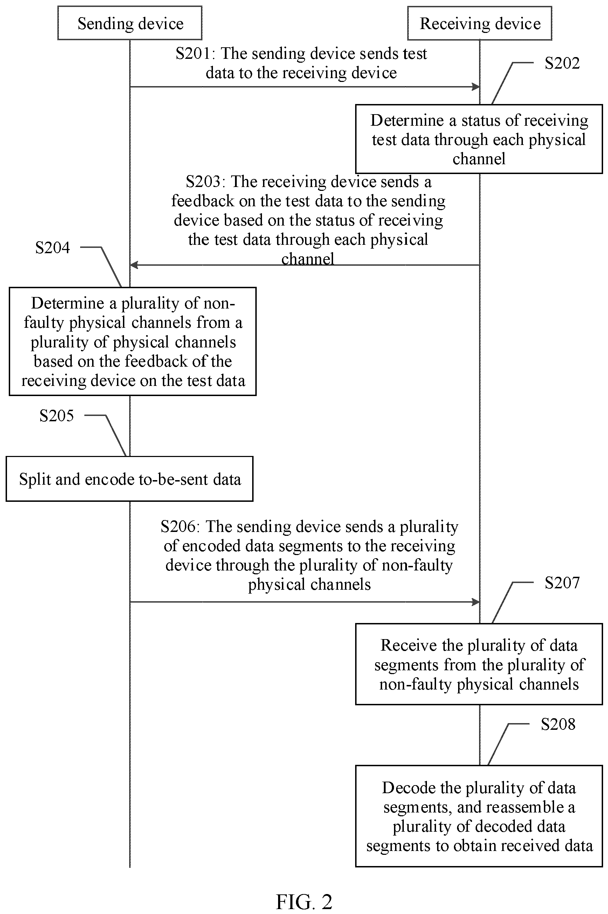

FIG. 2 is a schematic flowchart of a data sending method and a data receiving method according to an embodiment of this application. The data sending method is implemented by a sending device that is set in a transmission device 1 and that supports the IEEE 802.3 Ethernet protocol. The data receiving method is implemented by a receiving device that is set in a transmission device 2 and that supports the IEEE 802.3 Ethernet protocol. Specifically, the data sending method and the data receiving method mainly include the following steps.

S201: The sending device sends test data to the receiving device through a plurality of physical channels.

During specific implementation, when the test data is sent to the receiving device through the plurality of physical channels, the test data may be sent directly and separately to the receiving device through the plurality of physical channels.

Optionally, to reduce an amount of data transmission, the test data may also be split into a plurality of test fields whose quantity is the same as that of the plurality of physical channels, and the plurality of test fields are in a one-to-one correspondence with the plurality of physical channels. Each of the plurality of test fields is sent to the receiving device through a corresponding physical channel.

S202: The receiving device determines a status of receiving test data by each physical channel.

Specifically, the receiving device receives test data from a corresponding physical channel, and determines status information (a faulty state and a non-faulty state) of each physical channel based on the status of receiving the test data by each physical channel.

S203: The receiving device sends a feedback on the test data to the sending device based on the status of receiving the test data by each physical channel.

S204: The sending device determines a plurality of non-faulty physical channels from the plurality of physical channels based on the feedback of the receiving device on the test data.

S205: The sending device splits and encodes to-be-sent data to obtain a plurality of encoded data segments. A quantity of data segments split by the sending device may be less than or equal to a quantity of the plurality of non-faulty physical channels.

Optionally, the sending device splits the to-be-sent data into a plurality of data segments of a same length, and encodes each data segment to obtain the plurality of encoded data segments.

Before the to-be-sent data is split, 64/66 conversion is first performed on the to-be-sent data, and a 64-bit data block is extended into a 66-bit information block. The IEEE802.3 Ethernet protocol is located at a 64-bit to 66-bit block conversion layer, and sorts and splits 66-bit data blocks. Using a 25G service as an example, the to-be-sent data is split into a plurality of 66-bit data blocks, every four 66-bit data blocks are divided into a data block group (a data segment), and each data block group is a 257-bit data block.

After the to-be-sent data is split into the plurality of data segments and before forward error correction (Forward Error Correction, FEC for short) encoding is performed separately on the plurality of data segments, scrambling processing is performed on each data block group, and an alignment overhead block (AM alignmark) is inserted at an interval of Y data block groups. After the alignment overhead block is inserted, FEC encoding is performed on the data segment, and then an alignment overhead block is inserted, and by analogy. In this way, an alignment overhead block is periodically inserted, an interval between two adjacent alignment overhead blocks is a data block of Yx257 bits. Y is a positive integer greater than 1.

S206: The sending device sends the plurality of encoded data segments to the receiving device through the plurality of non-faulty physical channels.

When the plurality of non-faulty physical channels are bundled into a large logical channel by using the IEEE802.3 Ethernet protocol, the sending device splits and encodes the to-be-sent data to obtain the plurality of encoded data segments, and bundles the plurality of non-faulty physical channels into the large logical channel. When sending the to-be-sent data, the sending device may send a first encoded data block group (a first data segment) to a first physical channel, send a second encoded data block group (a second data segment) to a second physical channel, and by analogy, send all data block groups to the plurality of physical channels in an average and polling manner. Alternatively, a last data block group may be sent to the first physical channel, a penultimate data block group may be sent to the second physical channel, and by analogy, all data block groups are sent to the plurality of physical channels in an average and polling manner. The data block groups on the plurality of physical channels are completely aligned when sent. In this way, the plurality of physical channels can be bundled to form the large logical channel.

It should be noted that a difference between the data sending method in this embodiment of this application and a data transmission method by using an IEEE 802.3 Ethernet in a conventional technology lies in that: When it is determined that a physical channel is faulty in the to-be-sent data in this embodiment of this application, the to-be-sent data may be transmitted through a non-faulty physical channel. Therefore, it is ensured that the receiving device can receive complete data. In this way, a data transmission rate is improved and a problem that data transmission fails due to a fault of a physical channel is resolved. In addition, because each of split data segments is of a same length, that is, an encoding mode of each data segment is same. When a physical channel is faulty and another physical channel is used for transmission, the data segment may be directly encoded. This makes data processing is simple and fast.

Optionally, when the plurality of encoded data segments are transmitted through the plurality of non-faulty physical channels, if a transmission rate required by a data segment is relatively high and a transmission rate of a single physical channel is limited, when the sending device transmits the plurality of encoded data segments through the plurality of non-faulty physical channels, the sending device may first determine a transmission rate required by the first data segment in the encoded data segment, and send, based on the transmission rate required by the first data segment, the first data segment through at least one non-faulty physical channel. The first data segment may be any data segment in the plurality of encoded data segments.

Specifically, when the first data segment is sent based on the transmission rate required by the first data segment through the at least one non-faulty physical channel, a transmission rate of each physical channel is first determined. Then, at least one physical channel used for transmitting the first data segment is determined based on a ratio of the transmission rate required by the first data segment to the transmission rate of each physical channel, and the first data segment is sent through the at least one physical channel.

For example, the transmission rate of each physical channel is 25 Gbps, if the transmission rate required by the first data segment is 50 Gbps, two physical channels are required to transmit the first data segment, so that the transmission rate required by the first data segment can be met.

Specifically, when the first data segment is transmitted through a plurality of physical channels, the first data segment is split into a plurality of sub-data segments, and the plurality of sub-data segments are transmitted through the plurality of physical channels.

S207: The receiving device receives the plurality of data segments from the plurality of non-faulty physical channels. A quantity of data segments may be less than or equal to a quantity of the plurality of non-faulty physical channels.

Optionally, the receiving device receives the plurality of data segments of a same length from the plurality of non-faulty physical channels.

Specifically, when the plurality of non-faulty physical channels are bundled into the large logical channel by using the IEEE802.3 Ethernet protocol, the receiving device bundles the plurality of non-faulty physical channels into the large logical channel, and receives the plurality of data segments from the plurality of non-faulty physical channels. When receiving the plurality of data segments, the receiving device may receive the first data block group (the first data segment) from the first physical channel, receive the second data block group (the second data segment) from the second physical channel, and by analogy, receive the plurality of data segments from the plurality of non-faulty physical channels. In this way, the plurality of non-faulty physical channels can be bundled to form the large logical channel.

Optionally, when the plurality of data segments are received through the plurality of non-faulty physical channels, if a transmission rate required by a data segment is relatively high and a transmission rate of a single physical channel is limited, when the receiving device receives the plurality of data segments through the plurality of non-faulty physical channels, the receiving device determines a transmission rate required by the second data segment in the plurality of data segments, and receives, based on the transmission rate required by the second data segment, the second data segment through at least one non-faulty physical channel. The second data segment may be any data segment in the plurality of data segments.

Specifically, when the second data segment is received based on the transmission rate required by the second data segment through the at least one non-faulty physical channel, a transmission rate of each physical channel is first determined. Then, at least one physical channel used for transmitting the second data segment is determined based on a ratio of the transmission rate required by the second data segment to the transmission rate of each physical channel, and the second data segment is received through the at least one physical channel.

When the second data segment is received through the plurality of physical channels, the plurality of data segments are received from the plurality of physical channels, and the plurality of obtained data segments are reassembled to obtain the second data segment.

S208: The receiving device decodes the plurality of data segments to obtain a plurality of decoded data segments, and separately reassembles the plurality of decoded data segments to obtain received data.

Before the plurality of data segments are decoded, alignment overhead blocks are aligned for the plurality of received data segments, the plurality of data blocks and the plurality of data segments are aligned by using positions of the aligned overhead blocks as a reference, and FEC decoding processing is performed based on the aligned data segments.

When the plurality of decoded data segments are reassembled, descrambling processing is performed on the plurality of decoded data segments. The plurality of descrambled data segments are converted into 257-bit data blocks, the plurality of 257-bit data blocks are converted into 66-bit data blocks, and a plurality of data segments converted into 66 bits are reassembled.

It should be noted that a difference between the data receiving method in this embodiment of this application and the data transmission method by using the IEEE 802.3 Ethernet in the conventional technology lies in that: When it is determined that a physical channel is faulty in the to-be-sent data in this embodiment of this application, the to-be-sent transmission may be transmitted through a non-faulty physical channel. Alternatively, the receiving device may receive the to-be-sent data sent by the sending device through the non-faulty physical channel, to obtain complete received data. In this way, a problem that data transmission fails due to a fault of a physical channel is resolved. In addition, because each data segment is of a same length, that is, an encoding mode and a decoding mode of each data segment are same. When a physical channel is faulty and another physical channel is used for transmission, the receiving device may directly decode the data segment. This makes data processing is simple and fast.

The following describes in detail the data sending method and the data receiving method provided in this application with reference to the embodiments.

### Embodiment 1

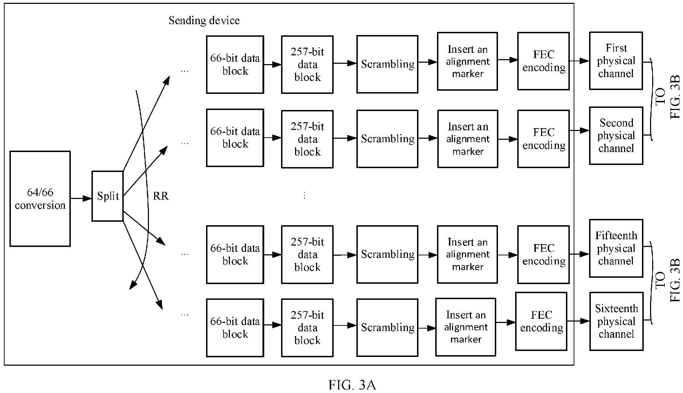

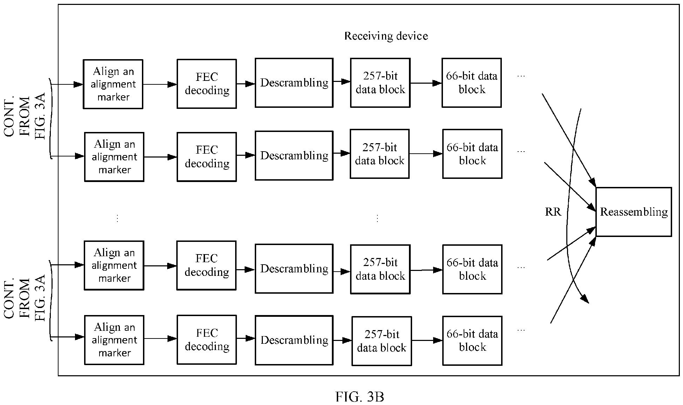

FIG. 3A AND FIG. 3B is a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into 16 data segments, a transmission rate requirement required by each data segment is 25 Gbps, and each data segment is transmitted through one non-faulty physical channel.

A sending device first converts the to-be-sent data from 64 bits to 66 bits, splits to-be-sent data that is converted into 66 bits into 4x16 66-bit data blocks. Every four data blocks form one data block group (each data block group is a 257-bit data block), scrambling processing is performed on each data block group, and an alignment overhead block is inserted. FEC encoding processing is separately performed on the split 16 data block groups. A first data block group is sent to a first physical channel, a second data block group is sent to a second physical channel, and by analogy, a sixteenth data block group is sent to a sixteenth physical channel.

A receiving device receives the to-be-sent data through 16 non-faulty physical channels. Specifically, the first data block group is first received from the first physical channel, the second data block group is received from the second physical channel, and by analogy, the sixteenth data block group is received from the sixteenth physical channel. Alignment overhead block locking is separately performed on the received data block groups, the 16 data block groups are aligned by using positions of the locked alignment overhead blocks as a reference. FEC decoding processing is separately performed on the aligned data block groups. Descrambling processing is performed on the 16 data block groups after FEC decoding. The descrambled 16 data block groups are separately converted into 257-bit data blocks, the 16 257-bit data blocks are separately converted into 66-bit data blocks, and 16 data blocks that are converted into 66-bit data blocks are reassembled, to obtain received data.

### Embodiment 2

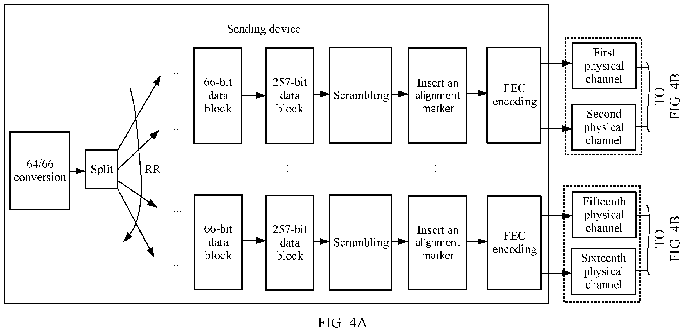

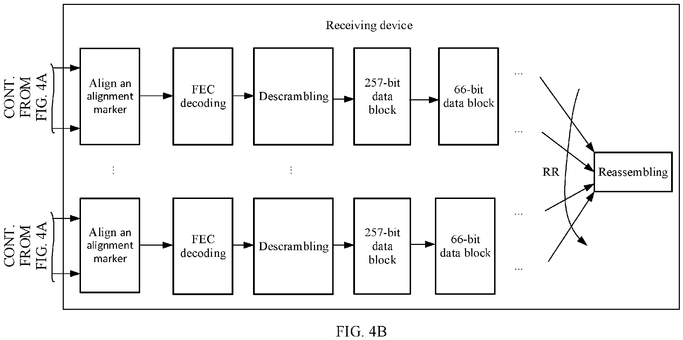

FIG. 4 is a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into eight data segments, a transmission rate requirement required by each data segment is 50 Gbps, and data transmission is performed on each data segment through two non-faulty physical channels.

A sending device first converts the to-be-sent data from 64 bits to 66 bits, splits to-be-sent data that is converted into 66 bits into 4x8 66-bit data blocks. Every four data blocks form one data block group (each data block group is a 257-bit data block), scrambling processing is performed on each data block group, and an alignment overhead block is inserted. FEC encoding processing is separately performed on the split eight data block groups. A first data block group is sent to a first physical channel and a second physical channel, a second data block group is sent to a third physical channel and a fourth physical channel, and by analogy, an eighth data block group is sent to a fifteenth physical channel and the sixteenth physical channel.

During specific implementation, when the first data block group is sent to the first physical channel and the second physical channel, the first data block group is split into two sub-data segments. A first sub-data segment is sent to the first physical channel. A second group of sub-data segments is sent to the second physical channel.

Specifically, a receiving device receives the first data block group from the first physical channel and the second physical channel, receives the second data block group from the third physical channel and the fourth physical channel, and by analogy, receives the eighth data block group from the fifteenth physical channel and the sixteenth physical channel. Alignment overhead block locking is separately performed on the received data block groups, the eight data block groups are aligned by using positions of the locked alignment overhead blocks as a reference. FEC decoding processing is separately performed on the aligned data block groups. Descrambling processing is performed on the eight data block groups after FEC decoding. The descrambled eight data block groups are separately converted into 257-bit data blocks, the eight 257-bit data blocks are separately converted into 66-bit data blocks, and eight data blocks that are converted into 66-bit data blocks are reassembled, to obtain received data.

During specific implementation, when receiving the first data block group from the first physical channel and the second physical channel, the receiving device receives the first sub-data segment of the first data block group from the first physical channel, receives the second sub-data segment of the first data block group from the second physical channel, and reassembles the first sub-data segment and the second sub-data segment to obtain the second data block group.

### Embodiment 3

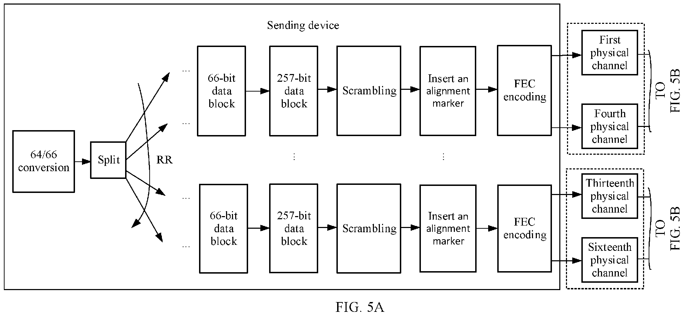

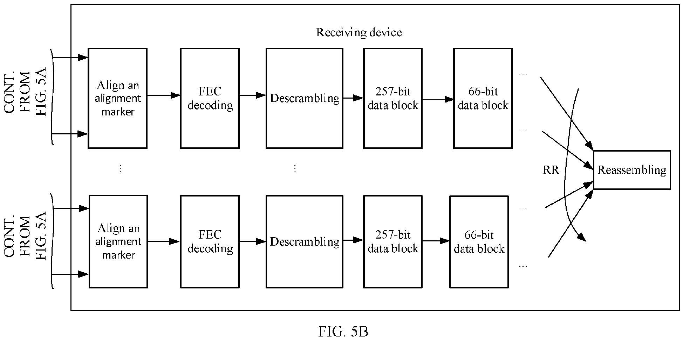

FIG. 5 is a schematic diagram of a transmission process of to-be-sent data according to an embodiment of this application. Specifically, a transmission rate of the to-be-sent data is 400 Gbps, a quantity of non-faulty physical channels is 16, and a transmission rate of each physical channel is 25 Gbps. If the to-be-sent data is split into four data segments, a transmission rate requirement required by each data segment is 100 Gbps, and one data segment may be transmitted through four non-faulty physical channels.

A sending device first converts the to-be-sent data from 64 bits to 66 bits, splits to-be-sent data that is converted into 66 bits into 4x4 66-bit data blocks. Every four data blocks form one data block group (each data block group is a 257-bit data block), scrambling processing is performed on each data block group, and an alignment overhead block is inserted. FEC encoding processing is separately performed on the split four data block groups. A first data block group is sent to a first physical channel, a second physical channel, a third physical channel, and a fourth physical channel. A second data block group is sent to a fifth physical channel, a sixth physical channel, a seventh physical channel, and an eighth physical channel. A third data block group is sent to a ninth physical channel, a tenth physical channel, an eleventh physical channel, and a twelfth physical channel. A fourth data block group is sent to the thirteenth physical channel, the fourteenth physical channel, the fifteenth physical channel, and the sixteenth physical channel.

During specific implementation, when the first data block group is sent to the first physical channel, the second physical channel, the third physical channel, and the fourth physical channel, the first data block group is first split into four sub-data segments. A first sub-data segment is sent to the first physical channel. A second sub-data segment is sent to the second physical channel. A third sub-data segment is sent to the third physical channel. A fourth sub-data segment is sent to the fourth physical channel.

A receiving device receives the first data block group from the first physical channel, the second physical channel, the third physical channel, and the fourth physical channel, receives the second data block group from the fifth physical channel, the sixth physical channel, the seventh physical channel, and the eighth physical channel, and by analogy, receives the fourth data block group from the thirteenth physical channel, the fourteenth physical channel, the fifteenth physical channel, and the sixteenth physical channel. Alignment overhead block locking is separately performed on the received data block groups, the four data block groups are aligned by using positions of the locked alignment overhead blocks as a reference. FEC decoding processing is separately performed on the aligned data block groups. Descrambling processing is performed on the four data block groups after FEC decoding. The descrambled four data block groups are separately converted into 257-bit data blocks, the four 257-bit data blocks are separately converted into 66-bit data blocks, and four data blocks that are converted into 66-bit data blocks are reassembled, to obtain received data.

During specific implementation, when receiving the first data block group from the first physical channel, the second physical channel, the third physical channel, and the fourth physical channel, the receiving device may receive the first sub-data segment of the first data block group from the first physical channel, receive the second sub-data segment of the first data block group from the second physical channel, receive the third sub-data segment of the first data block group from the third physical channel, receive the fourth sub-data segment of the first data block group from the fourth physical channel, and reassembles the first sub-data segment, the second sub-data segment, the third sub-data segment, and the fourth sub-data segment to obtain the first data block group.

Similarly, if the to-be-sent data is split into two data segments, a transmission rate required by each data block group is 200 Gbps, and one data segment is transmitted through eight physical channels. A specific data transmission process is not described in detail in this application.

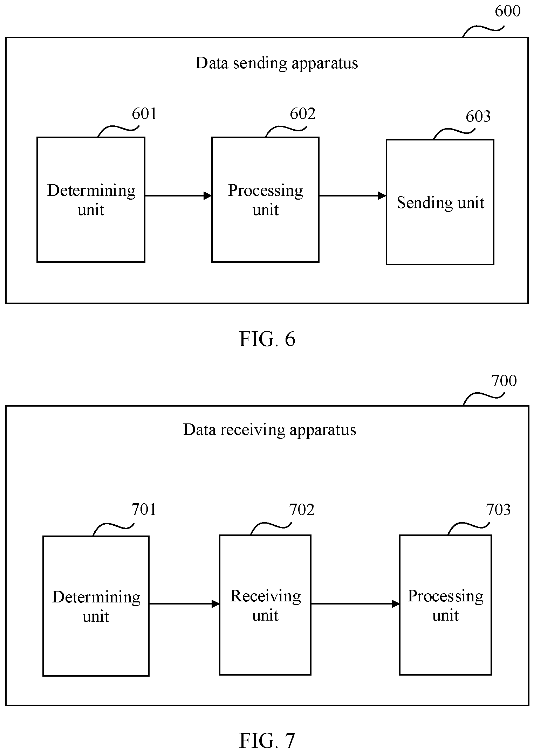

Based on the foregoing embodiment, an embodiment of this application further provides a data sending apparatus. The apparatus may be configured to perform the data sending method shown in FIG. 2. Referring to FIG. 6, the data sending apparatus 600 includes a determining unit 601, a processing unit 602, and a sending unit 603.

The determining unit 601 is configured to determine a plurality of non-faulty physical channels from a plurality of physical channels.

The processing unit 602 is configured to split and encode to-be-sent data to obtain a plurality of encoded data segments.

The sending unit is configured to transmit the plurality of encoded data segments through the plurality of non-faulty physical channels.

Optionally, the processing unit 602 is specifically configured to: split the to-be-sent data into a plurality of data segments of a same length, and encode each data segment.

Optionally, the sending unit 603 is specifically configured to: determine a transmission rate required by a first data segment in the plurality of encoded data segments, and send, based on the transmission rate required by the first data segment, the first data segment through at least one non-faulty physical channel.

Optionally, the sending unit 603 is specifically configured to: determine a transmission rate of each physical channel; and determine, based on a ratio of the transmission rate required by the first data segment to the transmission rate of each physical channel, at least one physical channel used for transmitting the first data segment, and sends the first data segment through the at least one physical channel.

Optionally, the determining unit 601 is specifically configured to: send test data to a receiving device through a plurality of physical channels; and determine the plurality of non-faulty physical channels from the plurality of physical channels based on a feedback of the receiving device on the test data.

It should be noted that the data sending apparatus 600 shown in FIG. 6 may be configured to perform the data sending method shown in FIG. 2. For an implementation that is not described in detail in the data sending apparatus 600, refer to related descriptions in the data sending method shown in FIG. 2.

Based on the foregoing embodiment, an embodiment of this application further provides a data receiving apparatus. The apparatus may be configured to perform the data receiving method shown in FIG. 2. Referring to FIG. 7, data receiving apparatus 700 includes a determining unit 701, a receiving unit 702, and a processing unit 703.

The determining unit 701 is configured to determine a plurality of non-faulty physical channels from a plurality of physical channels.

The receiving unit 702 is configured to receive a plurality of data segments from the plurality of non-faulty physical channels.

The processing unit 703 is configured to separately decode the plurality of data segments to obtain a plurality of decoded data segments, and reassemble the plurality of decoded data segments to obtain received data.

Optionally, the receiving unit 702 is specifically configured to receive a plurality of data segments of a same length from the plurality of non-faulty physical channels.

Optionally, the receiving unit 702 is specifically configured to: determine a transmission rate required by a second data segment in the plurality of data segments, and receive, based on the transmission rate required by the second data segment, the second data segment through at least one non-faulty physical channel.

Optionally, the receiving unit 702 is specifically configured to: determine a transmission rate of each physical channel; and determine, based on a ratio of the transmission rate required by the second data segment to the transmission rate of each physical channel, at least one physical channel used for transmitting the second data segment, and receive the second data segment through the at least one physical channel.

Optionally, the determining unit 703 is specifically configured to: receive test data sent by a sending device, and send a feedback on the test data to the sending device based on a receiving status of the test data.

It should be noted that the data receiving apparatus 700 shown in FIG. 7 may be configured to perform the data receiving method shown in FIG. 2. For an implementation that is not described in detail in the data receiving apparatus 700, refer to related descriptions in the data receiving method shown in FIG. 2.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. A data sending method, comprising:
splitting, by a transmit end, TX, to-be-sent data into 4*N data blocks corresponding to N non-faulty physical channels,
wherein each of the 4*N data blocks is a data block whose size is 66 bits, and N is a positive integer;
obtaining a 257-bit data block according to every four 66-bit data blocks corresponding to a same physical channel;
scrambling, by the TX, at least one 257-bit data block;
inserting, by the TX, an alignment overhead block into the scrambled at least one 257-bit data block, and performing forward error correction, FEC, coding; and
sending, by the TX, the at least one FEC-encoded 257-bit data block through the N non-faulty physical channels.

2. The sending method according to claim 1, wherein the sending, by the TX, the at least one FEC-encoded 257-bit data block through the N non-faulty physical channels comprises:
determining, by the TX, a transmission rate required by the at least one FEC-encoded 257-bit data block; and;
sending, by the TX, the at least one FEC-encoded 257-bit data block through the N non-faulty physical channels according to a transmission rate required by the at least one FEC-encoded 257-bit data block.

3. The sending method according to claim 2, wherein the sending, by the TX, the at least one FEC-encoded 257-bit data block through the N non-faulty physical channels according to a transmission rate required by the at least one FEC-encoded 257-bit data block comprises:
determining, by the TX, a transmission rate of each physical channel;
determining, by the TX, based on a ratio of a transmission rate required by the at least one FEC-encoded 257-bit data block to the transmission rate of each physical channel, at least one physical channel used to transmit the at least one FEC-encoded 257-bit data block; and
sending, by the TX, the at least one FEC-encoded 257-bit data block through the at least one physical channel.

4. The sending method according to any one of claims 1 to 3, wherein the method further comprises:
sending, by the TX, test data to a receive end, RX, through the N non-faulty physical channels; and;
determining, by the TX, the N non-faulty physical channels from the N non-faulty physical channels according to the feedback of the RX for the test data.

5. The sending method according to any one of claims 1 to 4, wherein before the splitting to-be-sent data, the method further comprises:
performing 64/66 conversion on the to-be-sent data, and extending a 64-bit data block into a 66-bit data block.

6. The sending method according to any one of claims 1 to 5, wherein an interval between two adjacent alignment overhead blocks is a data block of Y*257-bit, and Y is a positive integer greater than 1.

7. A data receiving method, comprising:
receiving, by receive end, RX, data through N non-faulty physical channels, wherein the data comprises at least one FEC-encoded 257-bit data block, and N is a positive integer;
performing, by the RX, alignment overhead block locking on received data, and separately performing FEC decoding and descrambling processing on aligned data to obtain at least one descrambled 257-bit data block; and
converting, by the RX, each 257-bit data block to obtain four 66-bit data blocks, to obtain a total of 4*N data blocks corresponding to the N non-faulty physical channels; and each of the 4*N data blocks is a data block whose size is 66 bits; and;
reassembling, by the RX, the 4*N data blocks to obtain received data.

8. The receiving method according to claim 7, wherein the receiving, by receive end, RX, data through N non-faulty physical channels comprises:
receiving, by the RX, N data segments of a same length through the N non-faulty physical channels.

9. The receiving method according to claim 7 or 8, wherein the method further comprises:
receiving, by the RX, test data sent by a transmit end, TX; and
sending, by the RX, the feedback of the test data to the TX according to the receiving status of the test data.

10. An Ethernet apparatus, configured to perform the method according to any one of claims 1 to 9.
